# EUROPÄISCHE PATENTSCHRIFT

(11) **EP 4 341 139 B1**
(45) Veröffentlichungstag und Bekanntmachung des Hinweises auf die Patenterteilung: **29.04.2026**
(21) Anmeldenummer: 22728877.6
(22) Anmeldetag: 12.05.2022
(51) Int. Cl.: B60T 17/22, B60W 50/00, B60W 50/04

(54) **PROGNOSEVORRICHTUNG UND PROGNOSEVERFAHREN FÜR ZUMINDEST EINE BREMSSYSTEMKOMPONENTE EINES BREMSSYSTEMS EINES FAHRZEUGS**
PREDICTION SYSTEM AND PREDICTION METHOD FOR AT LEAST ONE BRAKING SYSTEM COMPONENT OF A BRAKING SYSTEM OF A VEHICLE
SYSTÈME DE PRÉVISION ET MÉTHODE DE PRÉVISION POUR AU MOINS UN COMPOSANT DE SYSTÈME DE FREINAGE D'UN SYSTÈME DE FREINAGE D'UN VÉHICULE

(30) Priorität: 19.05.2021 DE 102021205091
(43) Veröffentlichungstag der Anmeldung: 27.03.2024
(73) Patentinhaber: Robert Bosch GmbH, 70442 Stuttgart (DE)
(72) Erfinder: ZEUTZIUS, Michael, 71732 Tamm (DE)
(86) Internationale Anmeldenummer: PCT/EP2022/062948
(87) Internationale Veröffentlichungsnummer: WO 2022/243170

(56) Entgegenhaltungen:
- DE-A1- 102017 101 510

## Beschreibung

Die Erfindung betrifft eine Prognosevorrichtung für zumindest eine Bremssystemkomponente eines Bremssystems eines Fahrzeugs. Ebenso betrifft die Erfindung ein Prognoseverfahren für zumindest eine Bremssystemkomponente eines Bremssystems eines Fahrzeugs.

### Stand der Technik

Aus dem Stand der Technik sind Verfahren zum Überwachen eines Kraftfahrzeugs bekannt. Beispielsweise beschreibt die DE 10 2017 218 446 A1 ein Verfahren zum Überwachen eines Kraftfahrzeugs mit automatisierter Fahrfunktion, bei welchem insbesondere ein Energiespeicher, welcher zumindest einen zum Überführen des Kraftfahrzeugs in seinen Stillstand ausgebildeten Verbraucher versorgt, überwacht wird.

Zusätzlich beschreibt die DE 10 2017 101 510 A1 eine Vorrichtung zum Diagnostizieren, Prognostizieren und Berichten des Gesundheitszustands eines Fahrzeugbremssystems, mittels welcher ein Pedalweg, eine Pedalkraft, relevante Operationen oder Zustände des Bremssystems, eine Fahrzeuggeschwindigkeit und eine Beschleunigung/Verzögerung des Fahrzeugs in verschiedene Koordinatensysteme eintragbar und die Koordinatensysteme zum Bestimmen des Gesundheitszustands des Fahrzeugbremssystems auswertbar sind.

### Offenbarung der Erfindung

Die Erfindung schafft eine Prognosevorrichtung für zumindest eine Bremssystemkomponente eines Bremssystems eines Fahrzeugs mit den Merkmalen des Anspruchs 1 und ein Prognoseverfahren für zumindest eine Bremssystemkomponente eines Bremssystems eines Fahrzeugs mit den Merkmalen des Anspruchs 5.

### Vorteile der Erfindung

Die vorliegende Erfindung schafft vorteilhafte Möglichkeiten nicht nur zur Überwachung, sondern auch zur Frühdiagnose zumindest einer Bremssystemkomponente eines Bremssystems eines Fahrzeugs. Insbesondere kann mittels der vorliegenden Erfindung für das gesamte Bremssystem eine Frühdiagnose erstellt werden. Die vorliegende Erfindung ermöglicht somit nicht nur eine Erkennung eines bereits erfolgten Ausfalls zumindest der einen Bremssystemkomponente des jeweiligen Bremssystems, sondern auch eine Vorhersage bezüglich einer zukünftigen Funktionsfähigkeit und eines zukünftigen Betriebsverhaltens zumindest der einen Bremssystemkomponente des Bremssystems. Wie nachfolgend genauer erläutert wird, kann für eine Vielzahl von verschiedenen Bremssystemkomponenten, wie beispielsweise für einen einem Hauptbremszylinder des jeweiligen Bremssystems vorgelagerten elektromechanischen Bremskraftverstärker und/oder für eine in das jeweilige Bremssystem integrierte motorisierte Plungervorrichtung (wie speziell einer IPB, Integrated Power Brake) deren zukünftige Funktionsfähigkeit mittels der vorliegenden Erfindung verlässlich prognostiziert werden. Da mittels einer Nutzung der vorliegenden Erfindung eine zukünftige Funktionsbeeinträchtigung oder ein zukünftiger Ausfall zumindest der einen Bremssystemkomponente des jeweiligen Bremssystems frühzeitiger vorhersagbar ist, eignet sie sich auch vorteilhaft zum Absichern eines autonomen Fahrens des mit dem jeweiligen Bremssystem ausgestatteten Fahrzeugs.

In einer vorteilhaften Ausführungsform der Prognosevorrichtung ist die Elektronikeinrichtung dazu ausgelegt und/oder programmiert, die Koordinatensysteme mit den eingetragenen Wertegruppen auf einer Speichereinrichtung der Prognosevorrichtung abzuspeichern, wobei die Elektronikeinrichtung zusätzlich dazu ausgelegt und/oder programmiert ist, während weiterer fahrerinduzierter und/oder autonomer Bremsungen des Fahrzeugs ermittelte Wertegruppen mit den auf der Speichereinrichtung abgespeicherten Koordinatensystemen zu vergleichen, um anhand des Vergleichs zu ermitteln, ob ein Bremsmanöver der jeweils von dem Fahrzeug aktuell ausgeführten Bremsung von Vergleichs-Bremsmanövern der während des Ermittelns der Wertegruppen der Koordinatensysteme ausgeführten Bremsungen abweicht, und unter zusätzlicher Berücksichtigung einer ermittelten Häufigkeit der Bremsmanöver der von dem Fahrzeug aktuell ausgeführten Bremsungen, welche von den Vergleichs-Bremsmanövern abweichen, abzuschätzen, ob ein Auftreten zumindest einer Funktionsbeeinträchtigung an zumindest der einen Bremssystemkomponente des Bremssystems zumindest während des vorgegebenen Prognosezeitinteralls wahrscheinlich ist. Über die Untersuchung der gesamten "Kaskade" mittels der vorliegenden Erfindung ist verlässlich erkennbar, an welcher Bremssystemkomponente oder welchen Bremssystemkomponenten des jeweiligen Bremssystems eine Funktionsbeeinträchtigung, ein Fehler oder ein Ausfall auftritt. Wie unten noch genauer erläutert ist, ist die mittels der hier beschriebenen Ausführungsform der Prognosevorrichtung ausgeführte Prognose für zumindest die eine Bremssystemkomponente des Fahrzeugs noch verbessert. Insbesondere eine wahrscheinliche maximale Fahr-Reichweite kann mittels der hier beschriebenen Ausführungsform der Prognosevorrichtung geschätzt werden.

Beispielsweise kann die Prognosevorrichtung an dem Fahrzeug montierbar sein. Das Fahrzeug kann somit mit seiner eigenen Prognosevorrichtung ausgestattet sein/werden.

Alternativ kann die Prognosevorrichtung eine Kommunikationseinrichtung umfassen, welche dazu ausgelegt ist, die von einer Datensendeeinrichtung des Fahrzeugs ausgesendeten Wertegruppen zu empfangen. In diesem Fall ist eine Montage der Prognosevorrichtung an dem Fahrzeug nicht notwendig. Die hier beschriebene Ausführungsform der Prognosevorrichtung kann deshalb problemlos mit einem vergleichsweise großen Volumen und/oder einem relativ hohen Gewicht ausgebildet werden. Außerdem kann die hier beschriebene Ausführungsform der Prognosevorrichtung auch von mehreren Fahrzeugen die von ihren Datensendeeinrichtungen ausgesendeten Wertegruppen empfangen, und deshalb zur Überwachung und zur Frühdiagnose zumindest der einen Bremssystemkomponente der Bremssysteme der Fahrzeuge genutzt werden.

Die vorausgehend beschriebenen Vorteile sind auch bei einem Ausführen eines entsprechenden Prognoseverfahrens für zumindest eine Bremssystemkomponente eines Bremssystems eines Fahrzeugs gewährleistet.

In einer vorteilhaften Ausführungsform des Prognoseverfahrens werden als die mindestens eine Bremswunschvorgabegröße ein Stangenweg einer an dem Bremspedal angebundenen Eingangsstange, eine Verstellgeschwindigkeit der Eingangsstange, eine von der Brems- oder Fahrsteuerautomatik angeforderte Soll-Motorstromstärke eines Motors einer motorisierten Bremsdruckaufbauvorrichtung des Bremssystems, eine von der Brems- oder Fahrsteuerautomatik angeforderte Soll-Betriebsspannung des Motors der motorisierten Bremsdruckaufbauvorrichtung, ein von der Brems- oder Fahrsteuerautomatik angefordertes Soll-Motordrehmoment des Motors der motorisierten Bremsdruckaufbauvorrichtung, eine von der Brems- oder Fahrsteuerautomatik angeforderte Soll-Leistungsaufnahme des Motors der motorisierten Bremsdruckaufbauvorrichtung, ein von der Brems- oder Fahrsteuerautomatik angeforderter Soll-Verstellweg mindestens eines verstellbaren Kolbens der motorisierten Bremsdruckaufbauvorrichtung und/oder eine von der Brems- oder Fahrsteuerautomatik angeforderte Soll-Pumprate mindestens einer in dem Bremssystem eingesetzten Pumpe ermittelt. Die hier aufgezählten Beispiele für die mindestens eine Bremswunschvorgabegröße sind mittels der herkömmlicherweise bereits an jedem Fahrzeugtyp eingesetzten Sensorik messbar oder verlässlich aus mindestens einem Signal der Bremsoder Fahrsteuerautomatik auslesbar.

Alternativ oder ergänzend können als die mindestens eine Bremssystemreaktionsgröße ein Hauptbremszylinderdruck in einem Hauptbremszylinder des Bremssystems, mindestens ein Bremsdruck in mindestens einem Radbremszylinder des Bremssystems, eine Motorstromstärke des Motors der motorisierten Bremsdruckaufbauvorrichtung des Bremssystems, eine Betriebsspannung des Motors der motorisierten Bremsdruckaufbauvorrichtung, ein Motordrehmoment des Motors der motorisierten Bremsdruckaufbauvorrichtung, eine Leistungsaufnahme des Motors der motorisierten Bremsdruckaufbauvorrichtung, ein Verstellweg des mindestens einen verstellbaren Kolbens der motorisierten Bremsdruckaufbauvorrichtung, eine Reglerzustand-Information über eine eventuell ausgeführte Bremsdruck-Regelung oder eine eventuell ausgeführte Fahrdynamik-Regelung, mindestens eine Temperatur an und/oder in zumindest der motorisierten Bremsdruckaufbauvorrichtung, eine Pumprate der mindestens einen in dem Bremssystem eingesetzten Pumpe, ein Getriebewirkungsgrad eines an der motorisierten Bremsdruckaufbauvorrichtung angebundenen Getriebes des Bremssystems und/oder mindestens ein Schaltzustand mindestens eines Ventils des Bremssystems ermittelt werden. Damit kann die hier beschriebene Ausführungsform des Prognoseverfahrens ohne eine Erweiterung der herkömmlicherweise bereits am Fahrzeug verbauten Sensorik ausgeführt werden.

Ebenso können als die mindestens eine Fahrzeugreaktionsgröße eine mittels des Bremssystems auf das Fahrzeug bewirkte Bremskraft, ein mittels des Bremssystems auf das Fahrzeug bewirktes Bremsmoment, ein Lenkwinkel des Fahrzeugs, eine Gierrate des Fahrzeugs, eine mittels des Bremssystems auf das Fahrzeug bewirkte Fahrzeugverzögerung, eine Längsgeschwindigkeit des Fahrzeugs, eine Quergeschwindigkeit des Fahrzeugs, eine Querbeschleunigung des Fahrzeugs und/oder eine Bordnetzspannung eines Bordnetzes des Fahrzeugs ermittelt werden. Auch die hier aufgezählten Beispiele für die mindestens eine Fahrzeugreaktionsgröße lassen sich in der Regel ohne eine Erweiterung der herkömmlicherweise bereits am Fahrzeug verbauten Sensorik bestimmen.

Beispielsweise können als der mindestens eine Umgebungsparameter eine Fahrbahnreibung, ein Fahrbahnneigungswinkel, ein Scheibenwischerstatus und/oder eine Außentemperatur ermittelt werden. Da das Bremsverhalten des Fahrzeugs häufig durch derartige Umgebungsbedingungen beeinträchtigt ist, kann das Mitberücksichtigen mindestens eines der hier ausgezählten Umgebungsparameter die Prognose verbessern.

Des Weiteren können die Koordinatensysteme mit den eingetragenen Wertegruppen auf einer Speichereinrichtung abgespeichert werden, wobei während weiterer fahrerinduzierter und/oder autonomer Bremsungen des Fahrzeugs ermittelte Wertegruppe mit den auf der Speichereinrichtung abgespeicherten Koordinatensystemen verglichen werden, um anhand des Vergleichs zu ermitteln, ob ein Bremsmanöver der jeweils von dem Fahrzeug aktuell ausgeführten Bremsung von Vergleichs-Bremsmanövern der während des Ermittelns der Wertegruppen der Koordinatensysteme ausgeführten Bremsungen abweicht, und wobei unter zusätzlicher Berücksichtigung einer ermittelten Häufigkeit der Bremsmanöver der von dem Fahrzeug aktuell ausgeführten Bremsungen, welche von den Vergleichs-Bremsmanövern abweichen, abgeschätzt wird, ob ein Auftreten zumindest einer Funktionsbeeinträchtigung an zumindest der einen Bremssystemkomponente des Bremssystems zumindest während des vorgegebenen Prognosezeitinteralls wahrscheinlich ist. Die Vorteile der hier beschriebenen Ausführungsform des Prognoseverfahrens werden unten noch ausführlich erläutert.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1g: ein Flussdiagramm und Koordinatensysteme zum Erläutern einer ersten Ausführungsform des Prognoseverfahrens;
- Fig. 2: ein Flussdiagramm zum Erläutern einer zweiten Ausführungsform des Prognoseverfahrens;
- Fig. 3: ein Flussdiagramm zum Erläutern einer dritten Ausführungsform des Prognoseverfahrens; und
- Fig. 4: eine schematische Darstellung einer Ausführungsform der Prognosevorrichtung.

### Ausführungsformen der Erfindung

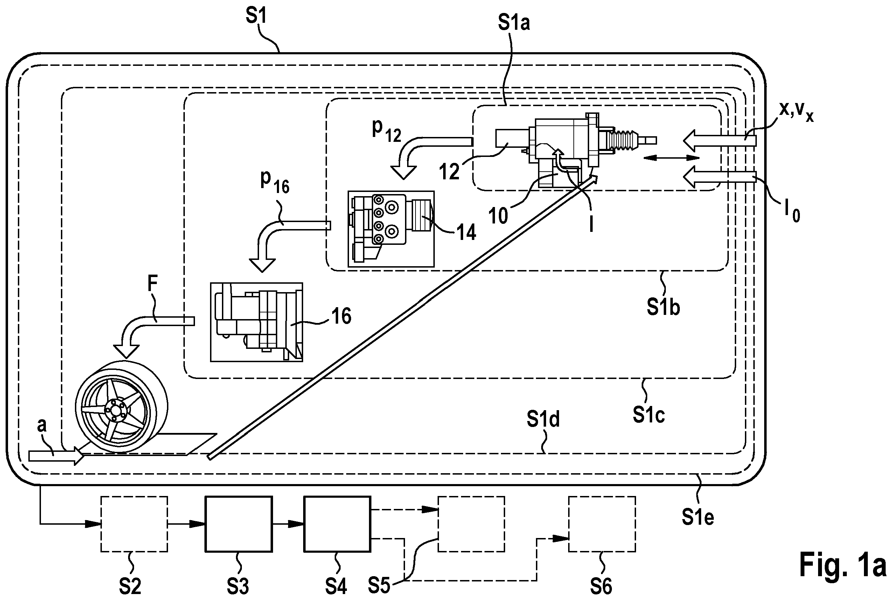

Fig. 1a bis 1g zeigen ein Flussdiagramm und Koordinatensysteme zum Erläutern einer ersten Ausführungsform des Prognoseverfahrens.

Das im Weiteren beschriebene Prognoseverfahren ist für eine Vielzahl verschiedener Typen von Bremssystemen ausführbar. Auch für ein Brake-By-Wire-Bremssystem kann das im Weiteren beschriebene Prognoseverfahren ausgeführt werden. Es wird ausdrücklich darauf hingewiesen, dass eine Ausführbarkeit des Prognoseverfahrens auch nicht auf einen speziellen Fahrzeugtyp/Kraftfahrzeugtyp des mit dem jeweiligen Bremssystem ausgestatteten Fahrzeugs/Kraftfahrzeugs beschränkt ist.

In einem Verfahrensschritt S1 des Prognoseverfahrens werden Wertegruppen von Werten während mehrerer fahrerinduzierter und/oder autonomer Bremsungen des Fahrzeugs ermittelt. Jede der in dem Verfahrensschritt S1 (vollständig) ermittelten Wertegruppen umfasst jeweils mindestens eine zu einem Zeitpunkt ermittelte Bremswunschvorgabegröße x, vₓ und I₀, mindestens eine zum gleichen Zeitpunkt ermittelte Bremssystemreaktionsgröße p₁₂, I und p₁₆ und mindestens eine zum gleichen Zeitpunkt ermittelte Fahrzeugreaktionsgröße F, α, r und a.

Bei der Ausführungsform der Fig. 1a bis 1g ist der Verfahrensschritt S1 in die Teilschritte S1a bis S1e unterteilt. In dem Teilschritt S1a wird die mindestens eine Bremswunschvorgabegröße x, vₓ und I₀ zu dem jeweiligen Zeitpunkt der zugeordneten Wertegruppe bestimmt. Unter der mindestens einen Bremswunschvorgabegröße x, vₓ und I₀ ist jeweils eine Größe zu verstehen, welche eine Betätigung eines Bremspedals durch einen Fahrer des Fahrzeugs und/oder eine Bremswunschvorgabe einer Brems- oder Fahrsteuerautomatik des Fahrzeugs wiedergibt. Die Brems- oder Fahrsteuerautomatik kann beispielsweise ein Fahrerassistenzsystem, wie speziell ein Abstandsregeltempomat (ACC-System, Adaptive Cruise Control System), ein Notbremssystem und/oder eine zum autonomen Fahren des Fahrzeugs verwendete Automatik umfassen. Die Bremswunschvorgabe der Brems- oder Fahrsteuerautomatik kann mindestens ein Signal, mittels welchem die Brems- oder Fahrsteuerautomatik ein autonomes Bremsen oder ein autonomes Fahren des Fahrzeugs ansteuert, sein.

Beispielhaft werden in dem Teilschritt S1a ein Stangenweg x einer an dem Bremspedal angebundenen Eingangsstange und eine Verstellgeschwindigkeit vₓ der Eingangsstange als die mindestens eine Bremswunschvorgabegröße x, vₓ und I₀, welche die Betätigung des Bremspedals durch den Fahrer wiedergibt, ermittelt. Zusätzlich wird eine von der Brems- oder Fahrsteuerautomatik angeforderte Soll-Motorstromstärke I₀ eines Motors eines als motorisierte Bremsdruckaufbauvorrichtung des Bremssystems eingesetzten elektromechanischen Bremskraftverstärkers 10, welcher einem Hauptbremszylinder 12 des Bremssystems vorgelagert ist, ermittelt. Die Soll-Motorstromstärke I₀ des Motors des elektromechanischen Bremskraftverstärkers 10 kann beispielsweise aus der Bremswunschvorgabe der Brems- oder Fahrsteuerautomatik herausgelesen werden.

Es wird hier auch darauf hingewiesen, dass die Soll-Motorstromstärke I₀ nur als Beispiel für eine die Bremswunschvorgabe der Brems- oder Fahrsteuerautomatik wiedergebende Bremswunschvorgabegröße x, vₓ und I₀ zu interpretieren ist. Anstelle oder als Ergänzung zu der Soll-Motorstromstärke I₀ können auch eine von der Brems- oder Fahrsteuerautomatik angeforderte Soll-Betriebsspannung des Motors der motorisierten Bremsdruckaufbauvorrichtung, ein von der Bremsoder Fahrsteuerautomatik angefordertes Soll-Motordrehmoment des Motors der motorisierten Bremsdruckaufbauvorrichtung, eine von der Brems- oder Fahrsteuerautomatik angeforderte Soll-Leistungsaufnahme des Motors der motorisierten Bremsdruckaufbauvorrichtung, ein von der Brems- oder Fahrsteuerautomatik angeforderter Soll-Verstellweg mindestens eines verstellbaren Kolbens der motorisierten Bremsdruckaufbauvorrichtung und/oder eine von der Brems- oder Fahrsteuerautomatik angeforderte Soll-Pumprate mindestens einer in dem Bremssystem eingesetzten Pumpe 14 als die mindestens eine Bremswunschvorgabegröße x, vₓ und I₀ ermittelt werden. Auch die Verwendung des elektromechanischen Bremskraftverstärkers 10 als motorisierte Bremsdruckaufbauvorrichtung ist nur beispielhaft zu interpretieren. Alternativ oder ergänzend kann auch eine integrierten Plungervorrichtung (wie speziell einer IPB, Integrated Power Brake) als motorisierte Bremsdruckaufbauvorrichtung (mit-) verwendet werden.

In den Teilschritten S1b und S1c wird zu dem jeweiligen Zeitpunkt der zugeordneten Wertegruppe die mindestens eine Bremssystemreaktionsgröße p₁₂, I und p₁₆, welche jeweils eine Reaktion zumindest einer Bremssystemkomponente des Bremssystems auf die mindestens eine Bremswunschvorgabegröße x, vₓ und I₀ oder einen Zustand an und/oder in zumindest der einen Bremssystemkomponente wiedergibt, ermittelt. Beispielhaft werden in dem Teilschritt S1b ein Hauptbremszylinderdruck p₁₂ in dem Hauptbremszylinder 12 des Bremssystems und eine Motorstromstärke I des Motors des als motorisierte Bremsdruckaufbauvorrichtung eingesetzten elektromechanischen Bremskraftverstärkers 10 als die mindestens eine Bremssystemreaktionsgröße p₁₂, I und p₁₆ bestimmt. Anstelle oder als Ergänzung zu der Motorstromstärke I können auch eine Betriebsspannung des Motors der motorisierten Bremsdruckaufbauvorrichtung, ein Motordrehmoment des Motors der motorisierten Bremsdruckaufbauvorrichtung, eine Leistungsaufnahme des Motors der motorisierten Bremsdruckaufbauvorrichtung (auch während einer fahrerinduzierten Bremsung) und ein Verstellweg des mindestens einen verstellbaren Kolbens der motorisierten Bremsdruckaufbauvorrichtung als die mindestens eine Bremssystemreaktionsgröße p₁₂, I und p₁₆ ermittelt werden.

In dem Teilschritt S1c werden außerdem mindestens ein Bremsdruck p₁₆ in mindestens einem Radbremszylinder 16 des Bremssystems und eine Reglerzustand-Information über eine evtl. ausgeführte Bremsdruck-Regelung, wie z.B. eine Antiblockiersystem-Regelung, oder eine evtl. ausgeführte Fahrdynamik-Regelung bestimmt. Wahlweise können noch mindestens eine Temperatur an und/oder in zumindest der motorisierten Bremsdruckaufbauvorrichtung, eine Pumprate der mindestens einen in dem Bremssystem eingesetzten Pumpe 14, ein Getriebewirkungsgrad eines an der motorisierten Bremsdruckaufbauvorrichtung angebundenen Getriebes des Bremssystems und/oder mindestens ein Schaltzustand mindestens eines Ventils des Bremssystems als die mindestens eine Bremssystemreaktionsgröße p₁₂, I und p₁₆ ermittelt werden.

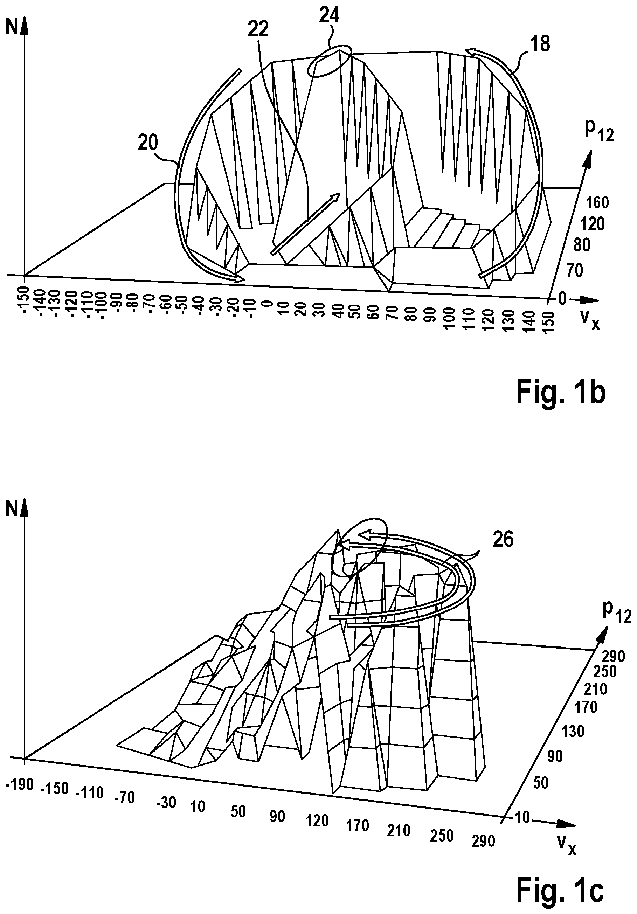

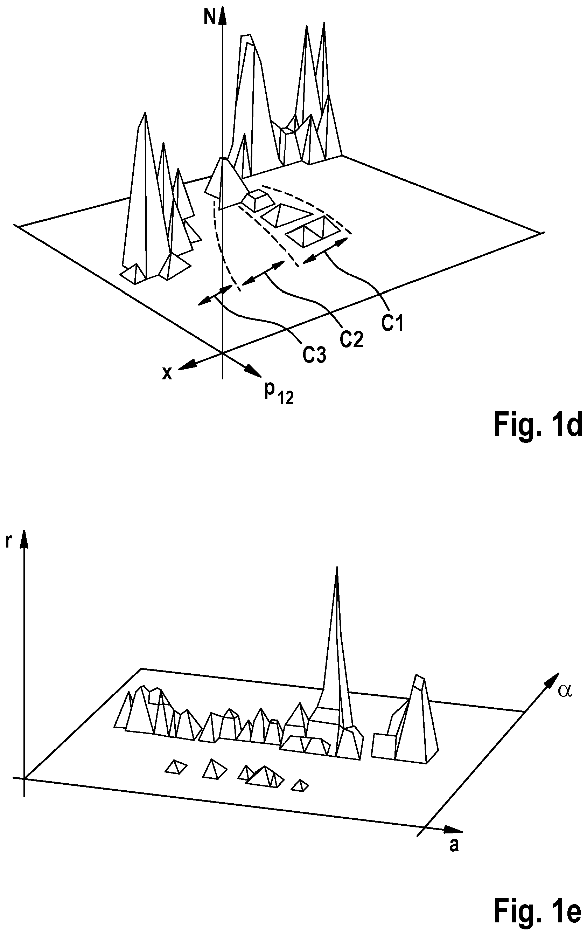

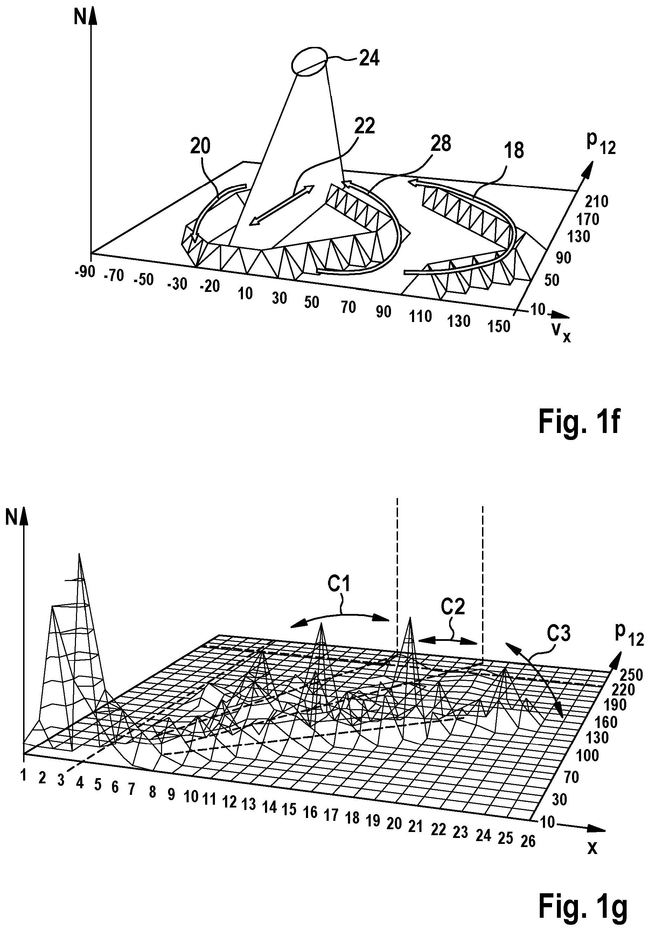

Der Teilschritt S1d wird ebenfalls zu dem jeweiligen Zeitpunkt der zugeordneten Wertegruppe ausgeführt. Der Teilschritt S1d dient zum Ermitteln der mindestens einen Fahrzeugreaktionsgröße F, α, r und a, welche eine physikalische Größe des mittels des Bremssystems abgebremsten Fahrzeugs wiedergibt. Lediglich beispielhaft werden bei der Ausführungsform der Fig. 1 a bis 1g eine mittels des Bremssystems auf das Fahrzeug bewirkte Bremskraft F, ein Lenkwinkel α des Fahrzeugs, eine Gierrate r des Fahrzeugs und eine mittels des Bremssystems auf das Fahrzeug bewirkte Fahrzeugverzögerung a als die mindestens eine Fahrzeugreaktionsgröße F, α, r und a ermittelt. Alternativ oder ergänzend können auch ein mittels des Bremssystems auf das Fahrzeug bewirktes Bremsmoment, eine Längsgeschwindigkeit des Fahrzeugs, eine Quergeschwindigkeit des Fahrzeugs, eine Querbeschleunigung des Fahrzeugs und/oder eine Bordnetzspannung eines Bordnetzes des Fahrzeugs als die mindestens eine Fahrzeugreaktionsgröße F, α, r und a bestimmt werden.

Die hier beschriebenen Teilschritte S1a bis S1d ermöglichen somit eine "kaskadenartige" Überwachung/Weiterverfolgung, wie sich die Betätigung des Bremspedals durch den Fahrer und/oder die Bremswunschvorgabe der Bremsoder Fahrsteuerautomatik als Reaktion zumindest der einen Bremssystemkomponente auf das mittels des Bremssystems abgebremsten Fahrzeug auswirkt. Der Verfahrensschritt S1 konzentriert sich dabei auf die Zusammenführung der Einzelüberwachungsergebnisse aus Monitoring, elektrischen Betrachtungen und thermischen Betrachtungen. Der Verfahrensschritt S1 macht damit einen Zusammenhang zwischen dem Fahrerbremswunsch und/oder der Bremswunschvorgabe der Brems- oder Fahrsteuerautomatik, dem Komponentenverhalten zumindest der einen Bremssystemkomponente des Bremssystems und dem Fahrzustand des Fahrzeugs deutlich. Wie anhand der nachfolgenden Beschreibung verständlich wird, kann auf diese Weise ein konsolidiertes Bremsmodell oder Bremskennfeld erstellt werden, welches zur Prognose für zumindest die eine Bremssystemkomponente des Bremssystems genutzt werden kann.

Außerdem umfasst der Verfahrensschritt S1 auch einen Teilschritt S1e. Der Teilschritt S1e wird zu dem gleichen Zeitpunkt, zu welchem die mindestens eine Bremswunschvorgabegröße x, vₓ und I₀, die mindestens eine Bremssystemreaktionsgröße p₁₂, I und p₁₆ und die mindestens eine Fahrzeugreaktionsgröße F, α, r und a der jeweiligen Wertegruppe ermittelt werden, ausgeführt. In dem Teilschritt S1e wird mindesten ein Umgebungsparameter µ bezüglich einer aktuellen Umgebung des Fahrzeugs zu dem jeweiligen Zeitpunkt der zugeordneten Wertegruppe ermittelt und der jeweiligen Wertegruppe beigefügt wird. Beispielhaft wird bei der hier beschriebenen Ausführungsform eine Fahrbahnreibung µ als der mindestens eine Umgebungsparameter µ in dem Teilschritt S1e ermittelt. Alternativ oder ergänzend können auch ein Fahrbahnneigungswinkel, ein Scheibenwischerstatus und/oder eine Außentemperatur als der mindestens eine Umgebungsparameter µ (mit-)bestimmt werden.

Es wird hier ausdrücklich darauf hingewiesen, dass die Werte einer gemeinsamen Wertegruppe jeweils zum gleichen Zeitpunkt ermittelt werden. Die Teilschritte S1a bis S1e werden somit für jede Wertegruppe gleichzeitig ausgeführt, und für die Vielzahl von Wertegruppen entsprechend oft wiederholt.

In einem optionalen Verfahrensschritt S2 können nach dem Verfahrensschritt S1 (aber noch vor einem Ausführen eines Verfahrensschritts S3) Wertegruppen, welche bei einer Außentemperatur außerhalb eines vorgegebenen Normaltemperaturbereichs, bei einer Verstellgeschwindigkeit vₓ des von dem Fahrer verstellten Bremspedals außerhalb eines vorgegeben Normalgeschwindigkeitsbereichs, bei einer Bordnetzspannung außerhalb eines vorgegebenen Normalspannungsbereichs, während eines Ausfalls einer Datenbereitstellungseinrichtung und/oder während eines Fadings ermittelt werden, herausgefiltert werden. In diesem Fall wird der nachfolgend beschriebene Verfahrensschritt S3 ohne Mitverwendung der in dem Verfahrensschritt S2 herausgefilterten Wertegruppen ausgeführt. Alternativ können auch die "herausgefilterten" Wertegruppen getrennt von den "nichtherausgefilterten" Wertegruppen auf die nachfolgend beschriebene Weise ausgewertet werden.

In dem Verfahrensschritt S3 werden die ermittelten (und nicht herausgefilterten) Wertegruppen in Koordinatensysteme eingetragen, wobei jedes der Koordinatensysteme mindestens zwei Achsen aufweist, welche jeweils die Bremswunschvorgabegröße oder mindestens eine der Bremswunschvorgabegrößen x, vₓ und I₀, die Bremssystemreaktionsgröße oder mindestens eine der Bremssystemreaktionsgrößen p₁₂, I und p₁₆ und/oder die Fahrzeugreaktionsgröße oder mindestens eine der Fahrzeugreaktionsgrößen F, α, r und a anzeigen. Außerdem werden die Wertegruppen in dem Verfahrensschritt S3 auch in mindestens ein weiteres Koordinatensystem eingetragen werden, bei welchem der Umgebungsparameter µ oder mindestens einer der Umgebungsparameter mittels einer Achse des jeweiligen Koordinatensystems oder mittels Sektoren in einer von zwei Achsen des jeweiligen Koordinatensystems aufgespannten Ebene angezeigt ist. Die mindestens eine andere Achse des mindestens einen weiteren Koordinatensystems zeigt die Bremswunschvorgabegröße oder mindestens eine der Bremswunschvorgabegrößen x, vₓ und I₀, die Bremssystemreaktionsgröße oder mindestens eine der Bremssystemreaktionsgrößen p₁₂, I und p₁₆ und/oder die Fahrzeugreaktionsgröße oder mindestens eine der Fahrzeugreaktionsgrößen F, α, r und a an.

Die Fig. 1b bis 1g zeigen Beispiele für die in dem Verfahrensschritt S3 erstellten Koordinatensysteme:
Bei dem Koordinatensystem der Fig. 1b geben eine erste Achse die Verstellgeschwindigkeit vₓ des Bremspedals, eine zweite Achse den Hauptbremszylinderdruck p₁₂ und eine dritte Achse eine Häufigkeit N der für die jeweiligen Werte der Verstellgeschwindigkeit vₓ und des Hauptbremszylinderdruck p₁₂ ermittelten Wertegruppen wieder. Mittels der in das Koordinatensystem der Fig. 1b eingetragenen Wertegruppen erhält man von dem Fahrzeug während der fahrerinduzierten und/oder autonomen Bremsungen ausgeführte Bremsmanöver, wie z.B. ein mittels des Pfeils 18 markiertes "schnelles Bremsen", ein mittels des Pfeils 20 markiertes "langsames Zurücknehmen der Bremspedalbetätigung", ein mittels des Pfeils 22 markiertes "langsames Bremsen und langsames Zurücknehmen der Bremspedalbetätigung" und ein mittels der Markierung 24 markiertes ABS-Regelverfahren bei hoher Reibung µ.

Auch bei dem Koordinatensystem der Fig. 1c zeigen eine erste Achse die Verstellgeschwindigkeit vₓ des Bremspedals und eine zweite Achse den Hauptbremszylinderdruck p₁₂ an. Allerdings ist mit der dritten Achse des Koordinatensystems der Fig. 1c die Motorstromstärke I des Motors des als motorisierte Bremsdruckaufbauvorrichtung eingesetzten elektromechanischen Bremskraftverstärkers 10 wiedergegeben. Auch die Pfeile 26 des Koordinatensystems der Fig. 1c geben Bremsmanöver wieder, welche hier jedoch nicht genauer erläutert werden.

Mittels des Koordinatensystems der Fig. 1d sind Bremsmanöver unter Berücksichtigung der währenddessen ausgeführten Regelungen wiedergegeben, wobei eine erste Achse den Stangenweg x des Bremspedals, eine zweite Achse den Hauptbremszylinderdruck p₁₂ und eine dritte Achse die Häufigkeit N wiedergeben. Wie in dem Koordinatensystem der Fig. 1d erkennbar ist, ist eine von der ersten Achse und der zweiten Achse aufgespannte Fläche des Koordinatensystems in mehrere Sektoren C1 bis C3 unterteilt, welche jeweils ein ABS-Regelverfahren bei niedriger Reibung µ (Sektor C1), ein ABS-Regelverfahren bei mittlerer Reibung µ (Sektor C2) und ein ABS-Regelverfahren bei hoher Reibung µ (Sektor C3) anzeigen.

In dem Koordinatensystem der Fig. 1e geben eine erste Achse die Fahrzeugverzögerung a, eine zweite Achse den Lenkwinkel α und eine dritte Achse die Gierrate r wieder.

Auch bei dem Koordinatensystem der Fig. 1f geben eine erste Achse die Verstellgeschwindigkeit vₓ des Bremspedals, eine zweite Achse den Hauptbremszylinderdruck p₁₂ und eine dritte Achse eine Häufigkeit N der für die jeweiligen Werte der Verstellgeschwindigkeit vₓ und des Hauptbremszylinderdruck p₁₂ ermittelten Wertegruppen wieder. Markierte Bremsmanöver in dem Koordinatensystem der Fig. 1f sind ein mittels des Pfeils 18 markiertes "schnelles Bremsen", ein mittels des Pfeils 28 markiertes "Bremsen mit mittlerer Geschwindigkeit", ein mittels des Pfeils 20 markiertes "langsames Zurücknehmen der Bremspedalbetätigung", ein mittels des Pfeils 22 markiertes "langsames Bremsen und langsames Zurücknehmen der Bremspedalbetätigung" und ein mittels der Markierung 24 markiertes ABS-Regelverfahren bei hoher Reibung µ.

Des Weiteren sind in dem Koordinatensystem der Fig. 1g der Stangenweg x des Bremspedals mittels einer ersten Achse, der Hauptbremszylinderdruck p₁₂ mittels einer zweiten Achse und die Häufigkeit N mittels einer dritten Achse angezeigt. Eine von der ersten Achse und der zweiten Achse aufgespannte Fläche des Koordinatensystems ist in die oben schon beschriebenen Sektoren C1 bis C3 unterteilt.

Der Verfahrensschritt S3 ermöglicht zusätzlich eine Erfassung der aktuellen und kumulierten Lasten und Lastenprofile für jede Fahrsituation, auch wenn dies in den oben erläuterten Koordinatensystemen nicht bildlich wiedergegeben ist.

In einem weiteren Verfahrensschritt S4 des hier beschriebenen Prognoseverfahrens wird anhand der Koordinatensysteme abgeschätzt, ob ein Auftreten zumindest einer Funktionsbeeinträchtigung an zumindest der einen Bremssystemkomponente des Bremssystems zumindest während eines vorgegebenen Prognosezeitintervalls wahrscheinlich ist. Der Verfahrensschritt S4 nutzt somit aus, dass anhand der Koordinatensysteme frühzeitig erkennbar ist, ob ein Verhalten zumindest der einen Bremssystemkomponente im Systemverbund (und evtl. im Verbund mit Umgebungseinflüssen) auf eine Beschädigung zumindest der einen Bremssystemkomponente oder auf einen Verschleiß zumindest der einen Bremssystemkomponente zurückzuführen ist. Im Gegensatz zu den gängigen detektierenden und eher reagierenden Möglichkeiten des Stands der Technik zum Erkennen von Beschädigungen oder Verschleißerscheinungen an einem Bremssystem ermöglicht das Ausführen des hier beschriebenen Prognoseverfahrens eine Frühdiagnose, bzw. ein präventives Erkennen von einer Beschädigung oder einem Verschleiß zumindest der einen Bremssystemkomponente.

Das hier beschriebene Prognoseverfahren ist somit eine sehr sensitive Möglichkeit zum frühzeitigen Erkennen von Fehlern oder Funktionsbeeinträchtigungen an dem jeweiligen Bremssystem. Vorteilhafterweise lässt sich anhand der jeweils erstellten Koordinatensysteme verlässlich prognostizieren, ob eine noch funktionsfähige Bremssystemkomponente des Bremssystems in naher Zukunft bestenfalls eine eingeschränkte Funktionsfähigkeit aufweisen wird. Insbesondere "beginnende Fehler" an dem Bremssystem können anhand der jeweils erstellten Koordinatensysteme erkannt/prognostiziert werden. Die dazu auszuführenden Verfahrensschritte S1 und S4 sind mittels einer vergleichsweise kostengünstigen und relativ kleinvolumigen Elektronik ausführbar.

Mittels des Prognoseverfahrens können insbesondere auch eine Gesamtfunktionalität des elektromechanischen Bremskraftverstärkers oder der integrierten Plungervorrichtung im Hinblick auf eine Prognose ihrer zukünftigen Einsetzbarkeit/Funktionsfähigkeit untersucht werden. Insbesondere können mittels dieser Methode auch zukünftige Ausfälle des elektromechanischen Bremskraftverstärkers oder der integrierten Plungervorrichtung vorhergesagt werden, welche mittels herkömmlicher Überwachungsmethoden und Sensoren gemäß dem Stand der Technik, wie beispielsweise mittels eines Motorlagesensors oder eines Differenzialsensors, nicht vorhersagbar sind. Das hier beschriebene Prognoseverfahren ermöglicht somit eine vorteilhafte Frühdiagnose insbesondere für den elektromechanischen Bremskraftverstärker oder die integrierte Plungervorrichtung des Bremssystems des Fahrzeugs. Es wird jedoch ausdrücklich darauf hingewiesen, dass mittels des Prognoseverfahrens auch andere Bremssystemkomponenten bezüglich einer bevorstehenden Funktionsbeeinträchtigung/ eines zukünftigen Ausfalls untersucht werden können.

Anhand der in dem Verfahrensschritt S3 ausgeführten Erfassung der aktuellen und kumulierten Lasten und Lastenprofile können Abweichungen erkannt werden, welche dann im Verfahrensschritt S4 über Ausschlussverfahren und Plausibilisierungsverfahren bestätigt oder entkräftet werden. Die Abweichungen können verschleiß- oder beschädigungsbedingt sein. Abweichungen bekannter Muster können insbesondere ein Indiz für einen schleichenden Verschleiß sein. Mittels des Verfahrensschritts S4 können auch Belastungsverläufe vorhergesagt werden.

Insbesondere sofern in dem Verfahrensschritt S4 prognostiziert/vorhergesagt wird, dass ein Auftreten zumindest einer Funktionsbeeinträchtigung an zumindest der einen Bremssystemkomponente des Bremssystems während des Prognosezeitintervalls wahrscheinlich ist, kann als optionaler Verfahrensschritt S5 eine entsprechende Warnung mittels einer Leuchtanzeige, mittels eine Tonausgabe und/oder mittels einer Bildanzeige an den Fahrer des Fahrzeugs übermittelt werden. Zum Übermitteln der Warnung können mindesten ein Leuchtelement des Fahrzeugs, eine Tonausgabeeinrichtung des Fahrzeugs, eine Bildanzeigeeinrichtung des Fahrzeugs und/oder ein Mobilgerät des Fahrers, wie insbesondere sein Mobiltelefon, eingesetzt werden. Der Fahrer kann somit auf vielfältige Weise dazu aufgefordert werden, eine Werkstatt aufzusuchen. Alternative oder ergänzend kann in dem Verfahrensschritt S5 auch eine der Prognose entsprechende Serviceinformation an die Werkstatt gesendet werden.

Sofern jedoch in dem Verfahrensschritt S4 prognostiziert/vorhergesagt wird, dass während des Prognosezeitintervalls kein Auftreten zumindest einer Funktionsbeeinträchtigung an zumindest der einen Bremssystemkomponente des Bremssystems zu befürchten ist, kann als optionaler Verfahrensschritt S6 auch ein Freigabekriterium für ein autonomes Fahren des Fahrzeugs ausgegeben werden. Entsprechend kann, sofern in dem Verfahrensschritt S4 prognostiziert/vorhergesagt wird, dass ein Auftreten zumindest einer Funktionsbeeinträchtigung an zumindest der einen Bremssystemkomponente des Bremssystems während des Prognosezeitintervalls wahrscheinlich ist, das Freigabekriterium für ein autonomes Fahren des Fahrzeugs deaktiviert werden. Vorzugsweise ist in diesem Fall die zum autonomen Fahren des Fahrzeugs verwendete Automatik derart ausgebildet, dass die Automatik nur bei Vorliegen des Freigabekriteriums in einem zum autonomen Fahren des Fahrzeugs geeigneten Betriebsmodus geschaltet ist. Auf diese Weise ist sichergestellt, dass das Fahrzeug nur dann in eine autonome Fahrt versetzt wird, wenn eine Funktionsbeeinträchtigung an seinem Bremssystem für zumindest die wahrscheinliche Dauer der autonomen Fahrt mit einer hohen Wahrscheinlichkeit ausgeschlossen werden kann.

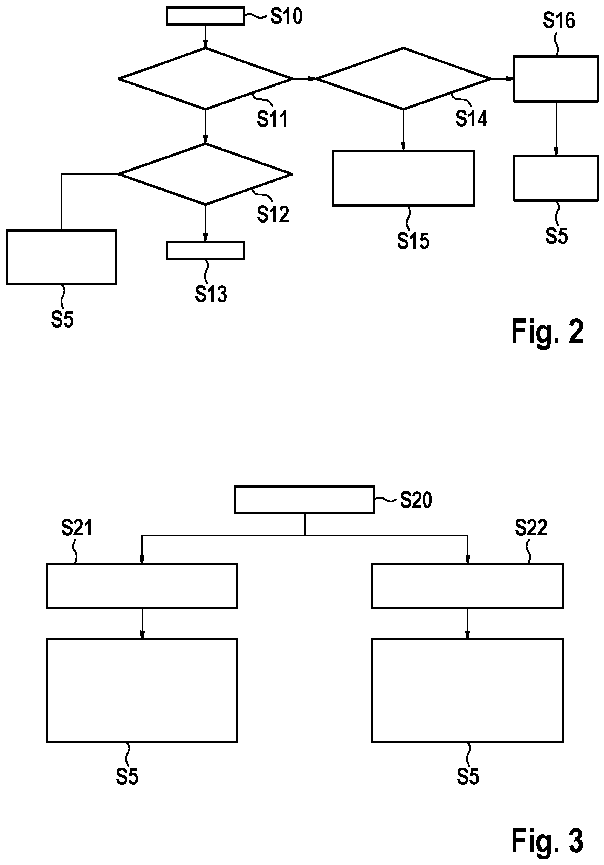

Fig. 2 zeigt ein Flussdiagramm zum Erläutern einer zweiten Ausführungsform des Prognoseverfahrens.

Das Prognoseverfahren der Fig. 2 ist eine Weiterbildung der zuvor beschriebenen Ausführungsform. Seine Ausführbarkeit ist weder auf einen speziellen Bremssystemtyp noch auf einen bestimmten Fahrzeugtyp beschränkt.

Als Weiterbildung der zuvor beschriebenen Ausführungsform wird nach dem Verfahrensschritt S4 ein Verfahrensschritt S10 ausgeführt, in welchem die Koordinatensysteme mit den eingetragenen Wertegruppen auf einer Speichereinrichtung abgespeichert werden. Danach werden während weiterer fahrerinduzierter und/oder autonomer Bremsungen des Fahrzeugs ermittelten Wertegruppen mit den auf der Speichereinrichtung abgespeicherten Koordinatensystemen verglichen. Dies ist mit dem Verfahrensschritt S11 angezeigt. Dabei wird anhand des Vergleichs ermittelt, ob ein Bremsmanöver der jeweils von dem Fahrzeug aktuell ausgeführten Bremsung von Vergleichs-Bremsmanövern der während des Ermittelns der Wertegruppen der Koordinatensysteme ausgeführten Bremsungen abweicht. Entspricht das Bremsmanöver der aktuell von dem Fahrzeug ausgeführten Bremsung mindestens einem der Vergleichs-Bremsmanöver, so wird in einem Verfahrensschritt S12 untersucht, ob Abweichungen während einer für das jeweilige Bremsmanöver prognostizierten Fahrt in mindestens einem der Koordinatensysteme auftreten. Ist dies nicht der Fall, so wird als Verfahrensschritt S13 die jeweilige Bremsung nur der Last des Bremssystems zugefügt. Andernfalls wird, sofern Abweichungen bei bekannten Bremsmanövern wiederholt auftreten, der oben schon beschriebene Verfahrensschritt S5 ausgeführt.

Wird in dem Verfahrensschritt S11 jedoch festgestellt, dass das Bremsmanöver der jeweils von dem Fahrzeug aktuell ausgeführten Bremsung von den Vergleichs-Bremsmanövern abweicht, so wird als Verfahrensschritt S14 untersucht, ob die jeweilige Abweichung innerhalb eines spezifizierten Betriebsbereichs auftritt. Ist dies der Fall, so wird als Verfahrensschritt S15 auf ein wiederholtes Auftreten von diesem Bremsmanöver im jeweils spezifizierten Betriebsbereich mit einer Aufnahme des jeweiligen Bremsmanövers/Musters in die betreffenden Koordinatensysteme reagiert. Andernfalls wird als Verfahrensschritt S16 eine Häufigkeit der Bremsmanöver der von dem Fahrzeug aktuell ausgeführten Bremsungen, welche von den Vergleichs-Bremsmanövern abweichen, ermittelt. Anhand der ermittelten Häufigkeit wird dann in dem Verfahrensschritt S16 abgeschätzt, ob ein Auftreten zumindest einer Funktionsbeeinträchtigung an zumindest der einen Bremssystemkomponente des Bremssystems zumindest während des vorgegebenen Prognosezeitintervalls wahrscheinlich ist. Danach kann erneut der Verfahrensschritt S5 ausgeführt werden.

Fig. 3 zeigt ein Flussdiagramm zum Erläutern einer dritten Ausführungsform des Prognoseverfahrens.

Auch das Prognoseverfahren der Fig. 3 ist eine Weiterbildung der Ausführungsform der Fig. 1. Seine Ausführbarkeit ist weder auf einen speziellen Bremssystemtyp noch auf einen bestimmten Fahrzeugtyp beschränkt.

Bei dem Prognoseverfahren der Fig. 3 wird nach dem Verfahrensschritt S4 ein Verfahrensschritt S20 ausgeführt, in welchem untersucht wird, ob sich an mindestens einem der Koordinatensysteme mindestens ein Beschädigungs-Indikator und/oder mindestens ein Verschleiß- und/oder Reibungsindikator erkennen lässt. Ein jeweiliger Beschädigungs-Indikator ist ein Anzeichen dafür, dass ein Fehler oder Ausfall zumindest der einen Bremssystemkomponente auf eine Beschädigung zumindest der einen Bremssystemkomponente, z.B. durch eine Stoßbelastung zumindest der einen Bremssystemkomponente, zurückzuführen ist. Ein jeweiliger Beschädigungs-Indikator kann häufig an einer Pedaldynamik des Bremspedals, an einem Fahrprofil des Fahrzeugs und/oder an mindestens einem Gradienten mindestens einer mechanischen oder elektrischen Größe erkannt werden. Entsprechend ist ein jeweiliger Verschleiß- und/oder Reibungsindikator ein Anzeichen dafür, dass ein Fehler oder Ausfall zumindest der einen Bremssystemkomponente durch einen Verschleiß zumindest der einen Bremssystemkomponente und/oder aufgrund einer an zumindest der einen Bremssystemkomponente auftretenden Reibung zurückzuführen ist. Ein jeweiliger Verschleiß- und/oder Reibungsindikator kann oft an einem Motormoment des Motors der motorisierten Bremsdruckaufbauvorrichtung, einer Drehzahl des Motors der motorisierten Bremsdruckaufbauvorrichtung, einer elektrischen oder mechanischen Leistung der motorisierten Bremsdruckaufbauvorrichtung und/oder an mindestens einer gemessenen Temperatur festgestellt werden.

Sofern in dem Verfahrensschritt S20 das Vorliegen mindestens eines Beschädigungs-Indikators an den Koordinatensystemen erkannt wird, wird in einem Verfahrensschritt S21 festgelegt, dass eine Beschädigung zumindest der einen Bremssystemkomponente aufgetreten ist. Gegebenenfalls kann dann der oben schon beschriebene Verfahrensschritt S5 ausgeführt werden. Wird in dem Verfahrensschritt S20 jedoch das Vorliegen mindestens eines Verschleißund/oder Reibungsindikators festgestellt, so wird als Verfahrensschritt S22 festgelegt, dass ein Verschleiß zumindest der einen Bremssystemkomponente und/oder eine an zumindest der einen Bremssystemkomponente auftretende Reibung erkennbar sind. Auch in diesem Fall kann dann der oben schon beschriebene Verfahrensschritt S5 ausgeführt werden.

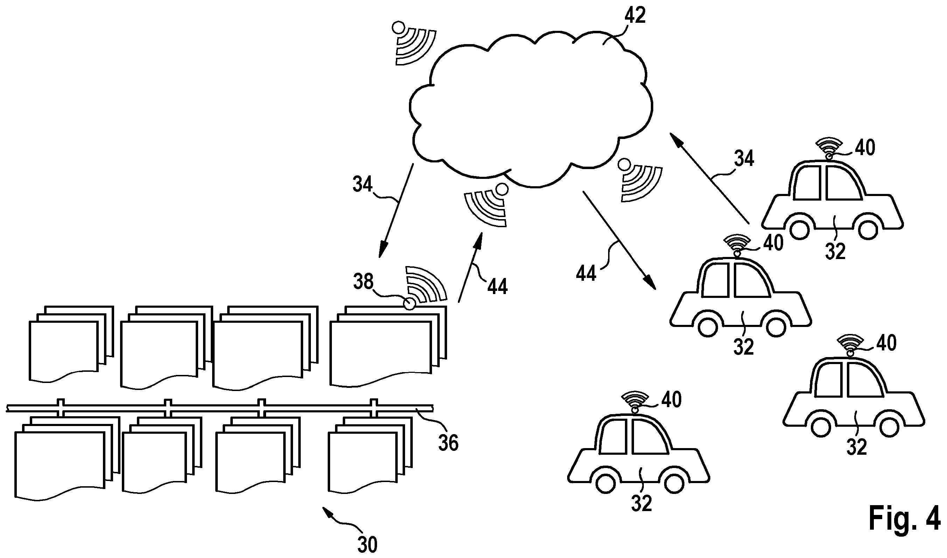

Fig. 4 zeigt eine schematische Darstellung einer Ausführungsform der Prognosevorrichtung.

Die im Weiteren beschriebene Prognosevorrichtung 30 ist zur Prognose, insbesondere zur Frühdiagnose, für zumindest eine Bremssystemkomponente eines Bremssystems eines Fahrzeugs 32 nutzbar. Eine Verwendbarkeit der im Weiteren beschriebenen Prognosevorrichtung 30 ist weder auf einen besonderen Bremssystemtyp des jeweiligen Bremssystems noch auf einen speziellen Fahrzeugtyp/Kraftfahrzeugtyp des mit dem jeweiligen Bremssystem ausgestatteten Fahrzeugs/Kraftfahrzeugs 32 beschränkt.

Mittels der Prognosevorrichtung 30 kann für zumindest eine Bremssystemkomponente des Bremssystems des Fahrzeugs 32 eine Prognose, insbesondere eine Frühdiagnose, erstellt werden. Dazu werden Wertegruppe 34 an eine Elektronikeinrichtung 36 der Prognosevorrichtung 30 bereitgestellt. Die Wertegruppen 34 weisen jeweils während mehrerer fahrerinduzierter und/oder autonomer Bremsungen des Fahrzeugs 32 ermittelte Werte auf. Außerdem umfassen die Wertegruppen 34 jeweils mindestens eine zu einem Zeitpunkt ermittelte Bremswunschvorgabegröße, mindestens eine zum gleichen Zeitpunkt ermittelte Bremssystemreaktionsgröße und mindestens eine zum gleichen Zeitpunkt ermittelte Fahrzeugreaktionsgröße. Wie oben bereits erläutert ist, gibt die mindestens eine Bremswunschvorgabegröße jeweils eine Betätigung eines Bremspedals durch einen Fahrer des Fahrzeugs 32 und/oder eine Bremswunschvorgabe einer Brems- oder Fahrsteuerautomatik des Fahrzeugs 32 wieder. Entsprechend zeigt die mindestens eine Bremssystemreaktionsgröße jeweils eine Reaktion zumindest der einen Bremssystemkomponente des Bremssystems auf die mindestens eine Bremswunschvorgabegröße oder einen Zustand an und/oder in zumindest der einen Bremssystemkomponente an. Außerdem gibt die mindestens eine Fahrzeugreaktionsgröße eine physikalische Größe des mittels des Bremssystems abgebremsten Fahrzeug 32 wieder. Beispiele für die mindestens eine Bremswunschvorgabegröße, die mindestens eine Bremssystemreaktionsgröße und die mindestens eine Fahrzeugreaktionsgröße sind oben schon aufgezählt.

Die Elektronikeinrichtung 36 ist dazu ausgelegt und/oder programmiert, die Wertegruppen 34 in Koordinatensysteme einzutragen, wobei jedes der Koordinatensysteme mindestens zwei Achse aufweist, welche jeweils die Bremswunschvorgabegröße oder mindestens eine der Bremswunschvorgabegrößen, die Bremssystemreaktionsgröße oder mindestens eine der Bremssystemreaktionsgrößen und/oder die Fahrzeugreaktionsgröße oder mindestens eine der Fahrzeugreaktionsgrößen anzeigen. Wie oben ebenfalls bereits ausgeführt ist, weisen die Wertegruppen 34 auch mindestens einen zum jeweiligen Zeitpunkt der zugeordneten Wertegruppe 34 ermittelten Umgebungsparameter auf, weshalb die Wertegruppen auch in entsprechende weitere Koordinatensysteme eingetragen werden.

Des Weiteren ist die Elektronikeinrichtung 36 auch dazu ausgelegt und/oder programmiert, anhand der Koordinatensysteme abzuschätzen, ob ein Auftreten zumindest einer Funktionsbeeinträchtigung an zumindest der einen Bremssystemkomponente des Bremssystems zumindest während eines vorgegebenen Prognosezeitinteralls wahrscheinlich ist. Die hier beschriebene Prognosevorrichtung 30 bewirkt somit die Vorteile des vorausgehend schon erläuterten Prognoseverfahrens. Die Prognosevorrichtung 30/ihre Elektronikeinrichtung 36 kann insbesondere zum Ausführen aller Verfahrensschritte des oben schon erläuterten Prognoseverfahrens ausgebildet/programmiert sein.

Unter der Prognosevorrichtung 30 kann eine an dem Fahrzeug 32 montierbare/verbaubare Prognosevorrichtung 30 verstanden werden. Wie in Fig. 4 jedoch bildhaft dargestellt ist, kann die Prognosevorrichtung 30 auch eine Kommunikationseinrichtung 38 umfassen, welche dazu ausgelegt ist, die von einer Datensendeeinrichtung 40 des Fahrzeugs 32 ausgesendeten Wertegruppen 34, insbesondere über das Internet 42, zu empfangen. Eine von der Prognosevorrichtung 30/ihres Elektronikeinrichtung 36 bestimmte Prognose-Information 44 kann dann wieder an das Fahrzeug 32 ausgesendet werden. Die Prognose-Information 44 kann dann am Fahrzeug 32 die oben schon erläuterten Verfahrensschritte S5 und S6 auslösen.

Die Prognosevorrichtung 30 kann somit auch bei einer relativ großen Distanz zwischen ihr und dem Fahrzeug 32 noch die vorteilhafte Prognose/Frühdiagnose ausführen. Das Zusammenwirken der Prognosevorrichtung 30 mit dem Fahrzeug 32 steigert somit weder das Gewicht des Fahrzeugs 32, noch wird ein an dem Fahrzeug 32 zur Verfügung stehender Bauraum für die Prognosevorrichtung 30 benötigt. Dies ermöglicht auch eine vergleichsweise großvolumige und/oder relativ schwere Ausbildung der Prognosevorrichtung 30, ohne dass dies die Einsetzbarkeit der Prognosevorrichtung 30 beeinträchtig. Außerdem ist das Zusammenwirken der Prognosevorrichtung 30 mit dem Fahrzeug 32 in diesem Fall auch ohne eine Steigerung der Herstellungskosten für das Fahrzeug 32 möglich. Wie in Fig. 4 bildlich dargestellt ist, kann die mit der Kommunikationseinrichtung 38 ausgestattete Prognosevorrichtung 30 auch mit mehreren Fahrzeugen 32 zum Ausführen der Prognose/Frühdiagnose zusammenwirken. Da Fahrzeuge 32 in der Regel mit einer eigenen Datensendeeinrichtung 40 ausgestattet sind, ist die Prognosevorrichtung 30 somit vielfach verwendbar. Optionaler Weise kann auf diese Weise auch eine Frühdiagnose "in 2 Ebenen" ausgeführt werden, indem zunächst die Prognose auf Fahrzeugebene erstellt wird und abschließend "in der höheren Ebene" der Cloud über eine Fahrzeugflotte aus mehreren/vielen Fahrzeugen 32 korreliert wird.

## Patentansprüche

1. Prognosevorrichtung (30) für zumindest eine Bremssystemkomponente (10, 12, 14, 16) eines Bremssystems eines Fahrzeugs (32) mit:
einer Elektronikeinrichtung (36), welche dazu ausgelegt und/oder programmiert ist:
- an die Elektronikeinrichtung (36) bereitgestellte Wertegruppen (34), welche jeweils während mehrerer fahrerinduzierter und/oder autonomer Bremsungen des Fahrzeugs (32) ermittelte Werte aufweisen und jeweils mindestens eine zu einem Zeitpunkt ermittelte Bremswunschvorgabegröße (x, vₓ und I₀), mindestens eine zum gleichen Zeitpunkt ermittelte Bremssystemreaktionsgröße (p₁₂, I und p₁₆) und mindestens eine zum gleichen Zeitpunkt ermittelte Fahrzeugreaktionsgröße (F, α, r und a) umfassen, wobei die mindestens eine Bremswunschvorgabegröße (x, vₓ und I₀) jeweils eine Betätigung eines Bremspedals durch einen Fahrer des Fahrzeugs (32) und/oder eine Bremswunschvorgabe einer Brems- oder Fahrsteuerautomatik des Fahrzeugs (32) wiedergibt, die mindestens eine Bremssystemreaktionsgröße (p₁₂, I und p₁₆) jeweils eine Reaktion zumindest der einen Bremssystemkomponente (10, 12, 14, 16) des Bremssystems auf die mindestens eine Bremswunschvorgabegröße (x, vₓ und I₀) oder einen Zustand an und/oder in zumindest der einen Bremssystemkomponente (10, 12, 14, 16) wiedergibt und die mindestens eine Fahrzeugreaktionsgröße (F, α, r und a) eine physikalische Größe des mittels des Bremssystems abgebremsten Fahrzeugs (32) wiedergibt, in Koordinatensysteme einzutragen, wobei jedes der Koordinatensysteme mindestens zwei Achse aufweist, welche jeweils die Bremswunschvorgabegröße oder mindestens eine der Bremswunschvorgabegrößen (x, vₓ und lₒ), die Bremssystemreaktionsgröße oder mindestens eine der Bremssystemreaktionsgrößen (p₁₂, I und p₁₆) und/oder die Fahrzeugreaktionsgröße oder mindestens eine der Fahrzeugreaktionsgrößen (F, α, r und a) anzeigen; und
- anhand der Koordinatensysteme abzuschätzen, ob ein Auftreten zumindest einer Funktionsbeeinträchtigung an zumindest der einen Bremssystemkomponente (10, 12, 14, 16) des Bremssystems zumindest während eines vorgegebenen Prognosezeitinteralls wahrscheinlich ist;
**dadurch gekennzeichnet, dass**
zusätzlich zu der mindestens einen zu dem jeweiligen Zeitpunkt der zugeordneten Wertegruppe (34) ermittelten Bremswunschvorgabegröße (x, vₓ und lₒ), der mindestens einen zum gleichen Zeitpunkt ermittelten Bremssystemreaktionsgröße (p₁₂, I und p₁₆) und der mindestens einen zum gleichen Zeitpunkt ermittelten Fahrzeugreaktionsgröße (F, α, r und a) der jeweiligen Wertegruppe (34) zum gleichen Zeitpunkt mindestens ein Umgebungsparameter (µ) bezüglich einer aktuellen Umgebung des Fahrzeugs (32) ermittelt und der jeweiligen Wertegruppe (34) beigefügt ist,
wobei die Elektronikeinrichtung (36) zusätzlich dazu ausgelegt und/oder programmiert ist:
- die Wertegruppen (34) in mindestens ein weiteres Koordinatensystem einzutragen, bei welchem der Umgebungsparameter (µ) oder mindestens einer der Umgebungsparameter mittels einer Achse des jeweiligen weiteren Koordinatensystems oder mittels Sektoren in einer von zwei Achsen des jeweiligen weiteren Koordinatensystems aufgespannten Ebene angezeigt ist, und
- unter zusätzlicher Berücksichtigung des mindestens einen weiteren Koordinatensystems abzuschätzen, ob ein Auftreten zumindest einer Funktionsbeeinträchtigung an zumindest der einen Bremssystemkomponente (10, 12, 14, 16) des Bremssystems zumindest während des vorgegebenen Prognosezeitinteralls wahrscheinlich ist.

2. Prognosevorrichtung (30) nach Anspruch 1, wobei die Elektronikeinrichtung (36) dazu ausgelegt und/oder programmiert ist, die Koordinatensysteme mit den eingetragenen Wertegruppen auf einer Speichereinrichtung der Prognosevorrichtung (30) abzuspeichern, und wobei die Elektronikeinrichtung (36) zusätzlich dazu ausgelegt und/oder programmiert ist, während weiterer fahrerinduzierter und/oder autonomer Bremsungen des Fahrzeugs (32) ermittelte Wertegruppen (34) mit den auf der Speichereinrichtung abgespeicherten Koordinatensystemen zu vergleichen, um anhand des Vergleichs zu ermitteln, ob ein Bremsmanöver der jeweils von dem Fahrzeug (32) aktuell ausgeführten Bremsung von Vergleichs-Bremsmanövern der während des Ermittelns der Wertegruppen der Koordinatensysteme ausgeführten Bremsungen abweicht, und unter zusätzlicher Berücksichtigung einer ermittelten Häufigkeit der Bremsmanöver der von dem Fahrzeug (32) aktuell ausgeführten Bremsungen, welche von den Vergleichs-Bremsmanövern abweichen, abzuschätzen, ob ein Auftreten zumindest einer Funktionsbeeinträchtigung an zumindest der einen Bremssystemkomponente (10, 12, 14, 16) des Bremssystems zumindest während des vorgegebenen Prognosezeitinteralls wahrscheinlich ist.

3. Prognosevorrichtung (30) nach Anspruch 1 oder 2, wobei die Prognosevorrichtung (30) an dem Fahrzeug (32) montierbar ist.

4. Prognosevorrichtung (30) nach Anspruch 1 oder 2, wobei die Prognosevorrichtung (30) eine Kommunikationseinrichtung (38) umfasst, welche dazu ausgelegt ist, die von einer Datensendeeinrichtung (40) des Fahrzeugs (32) ausgesendeten Wertegruppen (34) zu empfangen.

5. Prognoseverfahren für zumindest eine Bremssystemkomponente (10, 12, 14, 16) eines Bremssystems eines Fahrzeugs (32) mit den Schritten:
- Ermitteln von Wertegruppen (34), welche jeweils während mehrerer fahrerinduzierter und/oder autonomer Bremsungen des Fahrzeugs (32) ermittelte Werte aufweisen und jeweils mindestens eine zu einem Zeitpunkt ermittelte Bremswunschvorgabegröße (x, vₓ und I₀), mindestens eine zum gleichen Zeitpunkt ermittelte Bremssystemreaktionsgröße (p₁₂, I und p₁₆) und mindestens eine zum gleichen Zeitpunkt ermittelte Fahrzeugreaktionsgröße (F, α, r und a) umfassen, wobei die mindestens eine Bremswunschvorgabegröße (x, vₓ und I₀) jeweils eine Betätigung eines Bremspedals durch einen Fahrer des Fahrzeugs und/oder eine Bremswunschvorgabe einer Brems- oder Fahrsteuerautomatik des Fahrzeugs wiedergibt, die mindestens eine Bremssystemreaktionsgröße (p₁₂, I und p₁₆) jeweils eine Reaktion zumindest der einen Bremssystemkomponente (10, 12, 14, 16) des Bremssystems auf die mindestens eine Bremswunschvorgabegröße (x, vₓ und I₀) oder einen Zustand an und/oder in zumindest der einen Bremssystemkomponente (10, 12, 14, 16) wiedergibt und die mindestens eine Fahrzeugreaktionsgröße (F, α, r und a) eine physikalische Größe des mittels des Bremssystems abgebremsten Fahrzeug (32) wiedergibt (S1);
- Eintragen der ermittelten Wertegruppen (34) in Koordinatensysteme, wobei jedes der Koordinatensysteme mindestens zwei Achse aufweist, welche jeweils die Bremswunschvorgabegröße oder mindestens eine der Bremswunschvorgabegrößen (x, vₓ und lₒ), die Bremssystemreaktionsgröße oder mindestens eine der Bremssystemreaktionsgrößen (p₁₂, I und p₁₆) und/oder die Fahrzeugreaktionsgröße oder mindestens eine der Fahrzeugreaktionsgrößen (F, α, r und a) anzeigen (S3); und
- Abschätzen anhand der Koordinatensysteme, ob ein Auftreten zumindest einer Funktionsbeeinträchtigung an zumindest der einen Bremssystemkomponente (10, 12, 14, 16) des Bremssystems zumindest während eines vorgegebenen Prognosezeitinteralls wahrscheinlich ist (S4),
**dadurch gekennzeichnet, dass**
zusätzlich zu der mindestens einen zu dem jeweiligen Zeitpunkt der zugeordneten Wertegruppe (34) ermittelten Bremswunschvorgabegröße (x, vₓ und lₒ), der mindestens einen zum gleichen Zeitpunkt ermittelten Bremssystemreaktionsgröße (p₁₂, I und p₁₆) und der mindestens einen zum gleichen Zeitpunkt ermittelten Fahrzeugreaktionsgröße (F, α, r und a) der jeweiligen Wertegruppe (34) zum gleichen Zeitpunkt mindestens ein Umgebungsparameter (µ) bezüglich einer aktuellen Umgebung des Fahrzeugs (32) ermittelt und der jeweiligen Wertegruppe (34) beigefügt wird (S1e),
die Wertegruppen (34) in mindestens ein weiteres Koordinatensystem eingetragen werden, bei welchem der Umgebungsparameter (µ) oder mindestens einer der Umgebungsparameter mittels einer Achse des jeweiligen weiteren Koordinatensystems oder mittels Sektoren in einer von zwei Achsen des jeweiligen weiteren Koordinatensystems aufgespannten Ebene angezeigt ist, und
unter zusätzlicher Berücksichtigung des mindestens einen weiteren Koordinatensystems abgeschätzt wird, ob ein Auftreten zumindest einer Funktionsbeeinträchtigung an zumindest der einen Bremssystemkomponente (10, 12, 14, 16) des Bremssystems zumindest während des vorgegebenen Prognosezeitinteralls wahrscheinlich ist.

6. Prognoseverfahren nach Anspruch 5, wobei als die mindestens eine Bremswunschvorgabegröße (x, vₓ und I₀) ein Stangenweg (x) einer an dem Bremspedal angebundenen Eingangsstange, eine Verstellgeschwindigkeit (vₓ) der Eingangsstange, eine von der Brems- oder Fahrsteuerautomatik angeforderte Soll-Motorstromstärke (I₀) eines Motors einer motorisierten Bremsdruckaufbauvorrichtung (10) des Bremssystems, eine von der Bremsoder Fahrsteuerautomatik angeforderte Soll-Betriebsspannung des Motors der motorisierten Bremsdruckaufbauvorrichtung (10), ein von der Brems- oder Fahrsteuerautomatik angefordertes Soll-Motordrehmoment des Motors der motorisierten Bremsdruckaufbauvorrichtung (10), eine von der Brems- oder Fahrsteuerautomatik angeforderte Soll-Leistungsaufnahme des Motors der motorisierten Bremsdruckaufbauvorrichtung (10), ein von der Brems- oder Fahrsteuerautomatik angeforderter Soll-Verstellweg mindestens eines verstellbaren Kolbens der motorisierten Bremsdruckaufbauvorrichtung (10) und/oder eine von der Brems- oder Fahrsteuerautomatik angeforderte Soll-Pumprate mindestens einer in dem Bremssystem eingesetzten Pumpe (14) ermittelt werden (S1a).

7. Prognoseverfahren nach Anspruch 5 oder 6, wobei als die mindestens eine Bremssystemreaktionsgröße (p₁₂, I und p₁₆) ein Hauptbremszylinderdruck (p₁₂) in einem Hauptbremszylinder (12) des Bremssystems, mindestens ein Bremsdruck (p₁₆) in mindestens einem Radbremszylinder (16) des Bremssystems, eine Motorstromstärke (I) des Motors der motorisierten Bremsdruckaufbauvorrichtung (10) des Bremssystems, eine Betriebsspannung des Motors der motorisierten Bremsdruckaufbauvorrichtung (10), ein Motordrehmoment des Motors der motorisierten Bremsdruckaufbauvorrichtung (10), eine Leistungsaufnahme des Motors der motorisierten Bremsdruckaufbauvorrichtung (10), ein Verstellweg des mindestens einen verstellbaren Kolbens der motorisierten Bremsdruckaufbauvorrichtung (10), eine Reglerzustand-Information über eine eventuell ausgeführte Bremsdruck-Regelung oder eine eventuell ausgeführte Fahrdynamik-Regelung, mindestens eine Temperatur an und/oder in zumindest der motorisierten Bremsdruckaufbauvorrichtung (10), eine Pumprate der mindestens einen in dem Bremssystem eingesetzten Pumpe (14), ein Getriebewirkungsgrad eines an der motorisierten Bremsdruckaufbauvorrichtung (10) angebundenen Getriebes des Bremssystems und/oder mindestens ein Schaltzustand mindestens eines Ventils des Bremssystems ermittelt werden (S1b, S1c).

8. Prognoseverfahren nach einem der Ansprüche 5 bis 7, wobei als die mindestens eine Fahrzeugreaktionsgröße (F, α, r und a) eine mittels des Bremssystems auf das Fahrzeug (32) bewirkte Bremskraft (F), ein mittels des Bremssystems auf das Fahrzeug (32) bewirktes Bremsmoment, ein Lenkwinkel (α) des Fahrzeugs (32), eine Gierrate (r) des Fahrzeugs (32), eine mittels des Bremssystems auf das Fahrzeug (32) bewirkte Fahrzeugverzögerung (a), eine Längsgeschwindigkeit des Fahrzeugs (32), eine Quergeschwindigkeit des Fahrzeugs (32), eine Querbeschleunigung des Fahrzeugs (32) und/oder eine Bordnetzspannung eines Bordnetzes des Fahrzeugs (32) ermittelt werden (S1d).

9. Prognoseverfahren nach einem der vorhergehenden Ansprüche 5 bis 8, wobei als der mindestens eine Umgebungsparameter (µ) eine Fahrbahnreibung (µ), ein Fahrbahnneigungswinkel, ein Scheibenwischerstatus und/oder eine Außentemperatur ermittelt werden (S1e).

10. Prognoseverfahren nach einem der Ansprüche 5 bis 9, wobei die Koordinatensysteme mit den eingetragenen Wertegruppen (34) auf einer Speichereinrichtung abgespeichert werden, wobei während weiterer fahrerinduzierter und/oder autonomer Bremsungen des Fahrzeugs (32) ermittelte Wertegruppe (34) mit den auf der Speichereinrichtung abgespeicherten Koordinatensystemen verglichen werden, um anhand des Vergleichs zu ermitteln, ob ein Bremsmanöver der jeweils von dem Fahrzeug (32) aktuell ausgeführten Bremsung von Vergleichs-Bremsmanövern der während des Ermittelns der Wertegruppen (34) der Koordinatensysteme ausgeführten Bremsungen abweicht, und wobei unter zusätzlicher Berücksichtigung einer ermittelten Häufigkeit der Bremsmanöver der von dem Fahrzeug (32) aktuell ausgeführten Bremsungen, welche von den Vergleichs-Bremsmanövern abweichen, abgeschätzt wird, ob ein Auftreten zumindest einer Funktionsbeeinträchtigung an zumindest der einen Bremssystemkomponente (10, 12, 14, 16) des Bremssystems zumindest während des vorgegebenen Prognosezeitinteralls wahrscheinlich ist (S10 bis S16).

## Claims

1. Prediction apparatus (30) for at least one brake system component (10,12, 14,16) of a brake system of a vehicle (32), having:
an electronic device (36) which is designed and/or programmed:
- to enter value groups (34) into coordinate systems, which value groups are made available to the electronic device (36) and each have values determined during a plurality of driver-induced and/or autonomous braking operations of the vehicle (32) and each comprise at least one brake request specification variable (x, vₓ and l₀) determined at a point in time, at least one brake system reaction variable (p₁₂, I and p₁₆) determined at the same point in time and at least one vehicle reaction variable (F, α, r and a) determined at the same point in time, wherein the at least one brake request specification variable (x, vₓ and I₀) represents in each case an actuation of a brake pedal by a driver of the vehicle (32) and/or a brake request specification from an automatic braking or driving control system of the vehicle (32), the at least one brake system reaction variable (p₁₂, I and p₁₆) in each case represents a reaction of at least the one brake system component (10, 12, 14, 16) of the brake system to the at least one brake request specification variable (x, vₓ and I₀) or a state at and/or in at least the one brake system component (10, 12, 14, 16) and the at least one vehicle reaction variable (F, α, r and a) represents a physical variable of the vehicle (32) braked by means of the brake system, wherein each of the coordinate systems has at least two axes, each of which indicates the brake request specification variable or at least one of the brake request specification variables x, vₓ and I₀), the brake system reaction variable or at least one of the brake system reaction variables (p₁₂, I and p₁₆) and/or the vehicle reaction variable or at least one of the vehicle reaction variables (F, α, r and a); and
- to estimate on the basis of the coordinate systems whether an occurrence of at least one functional impairment at at least the one brake system component (10, 12, 14, 16) of the brake system is probable at least during a predefined prediction time interval;
**characterized in that**
in addition to the at least one brake request specification variable (x, vₓ and I₀) determined at the respective point in time of the assigned value group (34), the at least one brake system reaction variable (p₁₂, I and p₁₆) determined at the same point in time and the at least one vehicle reaction variable (F, α, r and a) of the respective value group (34) determined at the same point in time, at least one environmental parameter (µ) relating to a current environment of the vehicle (32) is determined at the same point in time and is added to the respective value group (34),
wherein the electronic device (36) is additionally designed and/or programmed:
- to enter the value groups (34) into at least one further coordinate system, in which the environmental parameter (µ) or at least one of the environmental parameters is indicated by means of an axis of the respective further coordinate system or by means of sectors in a plane spanned by two axes of the respective further coordinate system, and
- to estimate, additionally taking into account the at least one further coordinate system, whether an occurrence of at least one functional impairment at at least the one brake system component (10, 12, 14, 16) of the brake system is probable at least during the predefined prediction time interval.

2. Prediction apparatus (30) according to Claim 1, wherein the electronic device (36) is designed and/or programmed to store the coordinate systems with the entered value groups on a storage device of the prediction apparatus (30), and wherein the electronic device (36) is additionally designed and/or programmed to compare value groups (34) determined during further driver-induced and/or autonomous braking operations of the vehicle (32) with the coordinate systems stored on the storage device in order to determine, on the basis of the comparison, whether a braking manoeuvre of the braking operation currently being carried out in each case by the vehicle (32) deviates from comparison braking manoeuvres of the braking operations carried out while determining the value groups of the coordinate systems, and to estimate, with additional consideration of a determined frequency of the braking manoeuvres of the braking operations currently being carried out by the vehicle (32), which deviate from the comparison braking manoeuvres, whether an occurrence of at least one functional impairment at at least the one brake system component (10, 12, 14, 16) of the brake system is probable at least during the predefined prediction time interval.

3. Prediction apparatus (30) according to Claim 1 or 2, wherein the prediction apparatus (30) is mountable on the vehicle (32).

4. Prediction apparatus (30) according to Claim 1 or 2, wherein the prediction apparatus (30) comprises a communication device (38) which is designed to receive the value groups (34) emitted by a data transmission device (40) of the vehicle (32).

5. Prediction method for at least one brake system component (10, 12, 14, 16) of a brake system of a vehicle (32), comprising the steps of:
- determining value groups (34) which each have values determined during a plurality of driver-induced and/or autonomous braking operations of the vehicle (32) and each comprise at least one brake request specification variable (x, vₓ and l₀) determined at a point in time, at least one brake system reaction variable (p₁₂, I and p₁₆) determined at the same point in time and at least one vehicle reaction variable (F, α, r and a) determined at the same point in time, wherein the at least one brake request specification variable (x, vₓ and I₀) represents in each case an actuation of a brake pedal by a driver of the vehicle and/or a brake request specification from an automatic braking or driving control system of the vehicle, the at least one brake system reaction variable (p₁₂, I and p₁₆) in each case represents a reaction of at least the one brake system component (10, 12, 14, 16) of the brake system to the at least one brake request specification variable (x, vₓ and l₀) or a state at and/or in at least the one brake system component (10, 12, 14, 16) and the at least one vehicle reaction variable (F, α, r and a) represents a physical variable of the vehicle (32) braked by means of the brake system (S1);
- entering the determined value groups (34) into coordinate systems, wherein each of the coordinate systems has at least two axes, each of which indicates the brake request specification variable or at least one of the brake request specification variables (x, vₓ and lₒ), the brake system reaction variable or at least one of the brake system reaction variables (p₁₂, I, and p₁₆) and/or the vehicle reaction variable or at least one of the vehicle reaction variables (F, α, r, and a) (S3); and
- estimating on the basis of the coordinate systems whether an occurrence of at least one functional impairment at at least the one brake system component (10, 12, 14, 16) of the brake system is probable at least during a predefined prediction time interval (S4),
**characterized in that**
in addition to the at least one brake request specification variable (x, vₓ and I₀) determined at the respective point in time of the assigned value group (34), the at least one brake system reaction variable (p₁₂, I and p₁₆) determined at the same point in time and the at least one vehicle reaction variable (F, α, r and a) of the respective value group (34) determined at the same point in time, at least one environmental parameter (µ) relating to a current environment of the vehicle (32) is determined at the same point in time and is added to the respective value group (34) (S1e),
the value groups (34) are entered into at least one further coordinate system, in which the environmental parameter (µ) or at least one of the environmental parameters is indicated by means of an axis of the respective further coordinate system or by means of sectors in a plane spanned by two axes of the respective further coordinate system, and
it is estimated, additionally taking into account the at least one further coordinate system, whether an occurrence of at least one functional impairment at at least the one brake system component (10, 12, 14, 16) of the brake system is probable at least during the predefined prediction time interval.

6. Prediction method according to Claim 5, wherein a rod travel (x) of an input rod connected to the brake pedal, an adjustment speed (vₓ) of the input rod, a target motor current intensity (I₀) of a motor of a motorized brake pressure build-up apparatus (10) of the brake system, as requested by the automatic braking or driving control system, a target operating voltage of the motor of the motorized brake pressure build-up apparatus (10), as requested by the automatic braking or driving control system, a target motor torque of the motor of the motorized brake pressure build-up apparatus (10), as requested by the automatic braking or driving control system, a target power consumption of the motor of the motorized brake pressure build-up apparatus (10), as requested by the automatic braking or driving control system, a target adjustment travel of at least one adjustable piston of the motorized brake pressure build-up apparatus (10), as requested by the automatic braking or driving control system, and/or a target pump rate of at least one pump (14) used in the brake system, as requested by the automatic braking or driving control system, is/are determined (S1a) as the at least one brake request specification variable (x, vₓ and I₀).

7. Prediction method according to Claim 5 or 6, wherein a master brake cylinder pressure (p₁₂) in a master brake cylinder (12) of the brake system, at least one brake pressure (p₁₆) in at least one wheel brake cylinder (16) of the brake system, a motor current intensity (I) of the motor of the motorized brake pressure build-up apparatus (10) of the brake system, an operating voltage of the motor of the motorized brake pressure build-up apparatus (10), a motor torque of the motor of the motorized brake pressure build-up apparatus (10), a power consumption of the motor of the motorized brake pressure build-up apparatus (10), an adjustment travel of the at least one adjustable piston of the motorized brake pressure build-up apparatus (10), controller state information about possibly executed brake pressure control or possibly executed driving dynamics control, at least one temperature at and/or in at least the motorized brake pressure build-up apparatus (10), a pump rate of the at least one pump (14) used in the brake system, a transmission efficiency of a transmission of the brake system connected to the motorized brake pressure build-up apparatus (10) and/or at least one switching state of at least one valve of the brake system is/are determined (S1b, S1c) as the at least one brake system reaction variable (p₁₂, I and p₁₆).

8. Prediction method according to one of Claims 5 to 7, wherein a braking force (F) brought about on the vehicle (32) by means of the brake system, a braking torque brought about on the vehicle (32) by means of the brake system, a steering angle (α) of the vehicle (32), a yaw rate (r) of the vehicle (32), a vehicle deceleration (a) brought about on the vehicle (32) by means of the brake system, a longitudinal speed of the vehicle (32), a lateral speed of the vehicle (32), a lateral acceleration of the vehicle (32) and/or an on-board electrical system voltage of an on-board electrical system of the vehicle (32) is/are determined (S1d) as the at least one vehicle reaction variable (F, α, r and a).

9. Prediction method according to one of the preceding Claims 5 to 8, wherein road friction (µ), a road inclination angle, a windscreen wiper status and/or an outside temperature is/are determined (S1e) as the at least one environmental parameter (µ).

10. Prediction method according to one of Claims 5 to 9, wherein the coordinate systems with the entered value groups (34) are stored on a storage device, wherein value groups (34) determined during further driver-induced and/or autonomous braking operations of the vehicle (32) are compared with the coordinate systems stored on the storage device in order to determine, on the basis of the comparison, whether a braking manoeuvre of the braking operation currently being carried out in each case by the vehicle (32) deviates from comparison braking manoeuvres of the braking operations carried out while determining the value groups (34) of the coordinate systems, and wherein it is estimated, with additional consideration of a determined frequency of the braking manoeuvres of the braking operations currently being carried out by the vehicle (32), which deviate from the comparison braking manoeuvres, whether an occurrence of at least one functional impairment at at least the one brake system component (10, 12, 14, 16) of the brake system is probable at least during the predefined prediction time interval (S10 to S16).

## Revendications

1. Équipement de prévision (30) pour au moins un composant de système de freinage (10, 12, 14, 16) d'un système de freinage d'un véhicule (32), comprenant :
un dispositif électronique (36) qui est conçu et/ou programmé pour :
- inscrire dans des systèmes de coordonnées des groupes de valeurs (34) fournis au dispositif électronique (36), lesquels comportent respectivement des valeurs déterminées lors de plusieurs freinages du véhicule (32) induits par le conducteur et/ou autonomes et comprennent respectivement au moins une grandeur de demande de freinage (x, vₓ et l₀) déterminée à un instant donné, au moins une grandeur de réaction de système de freinage (p₁₂, I et p₁₆) déterminée au même instant et au moins une grandeur de réaction de véhicule (F, α, r et a) déterminée au même instant, ladite au moins une grandeur de demande de freinage (x, vₓ et l₀) représentant respectivement un actionnement d'une pédale de frein par un conducteur du véhicule (32) et/ou une consigne de freinage d'un automate de freinage ou de pilotage du véhicule (32), ladite au moins une grandeur de réaction de système de freinage (p₁₂, I et p₁₆) représentant respectivement une réaction d'au moins ledit un composant de système de freinage (10, 12, 14, 16) du système de freinage à ladite au moins une grandeur de demande de freinage (x, vₓ et l₀) ou un état au niveau de et/ou dans au moins ledit un composant de système de freinage (10, 12, 14, 16), et ladite au moins une grandeur de réaction de véhicule (F, α, r et a) représentant une grandeur physique du véhicule (32) freiné au moyen du système de freinage, chacun des systèmes de coordonnées présentant au moins deux axes qui affichent respectivement la grandeur de demande de freinage ou au moins l'une des grandeurs de consigne de freinage (x, vₓ et I₀), la grandeur de réaction de système de freinage ou au moins l'une des grandeurs de réaction de système de freinage (p₁₂, I et p₁₆) et/ou la grandeur de réaction de véhicule ou au moins l'une des grandeurs de réaction de véhicule (F, α, r et a) ; et
- à l'aide des systèmes de coordonnées, estimer si l'apparition d'au moins une dégradation fonctionnelle au niveau d'au moins ledit un composant de système de freinage (10, 12, 14, 16) du système de freinage est probable au moins pendant un intervalle de temps de prévision prédéfini ;
**caractérisé en ce que**
en plus de ladite au moins une grandeur de demande de freinage (x, v, et I₀) déterminée à l'instant respectif du groupe de valeurs (34) associé, de ladite au moins une grandeur de réaction de système de freinage (p₁₂, I et p₁₆) déterminée au même instant et de ladite au moins une grandeur de réaction de véhicule (F, α, r et a) du groupe de valeurs (34) respectif déterminée au même instant, au moins un paramètre environnemental (µ) relatif à un environnement actuel du véhicule (32) est déterminé au même instant et est joint au groupe de valeurs (34) respectif,
le dispositif électronique (36) étant en outre conçu et/ou programmé pour :
- inscrire les groupes de valeurs (34) dans au moins un autre système de coordonnées, dans lequel le paramètre environnemental (µ) ou au moins l'un des paramètres environnementaux est affiché au moyen d'un axe de l'autre système de coordonnées respectif ou au moyen de secteurs dans un plan défini par deux axes de l'autre système de coordonnées respectif, et
- estimer, en tenant compte en outre dudit au moins un autre système de coordonnées, si l'apparition d'au moins une dégradation fonctionnelle au niveau d'au moins ledit un composant de système de freinage (10, 12, 14, 16) du système de freinage est probable au moins pendant l'intervalle de temps de prévision prédéfini.

2. Dispositif de prévision (30) selon la revendication 1, dans lequel le dispositif électronique (36) est conçu et/ou programmé pour mémoriser dans un dispositif de mémoire du dispositif de prévision (30) les systèmes de coordonnées, avec les groupes de valeurs inscrits, et dans lequel le dispositif électronique (36) est en outre conçu et/ou programmé pour comparer des groupes de valeurs (34), déterminés lors d'autres freinages du véhicule (32) induits par le conducteur et/ou autonomes, avec les systèmes de coordonnées mémorisés dans le dispositif de mémoire, afin de déterminer sur la base de la comparaison si une manœuvre de freinage du freinage actuellement effectué par le véhicule (32) s'écarte de manœuvres de freinage de comparaison des freinages effectués lors de la détermination des groupes de valeurs des systèmes de coordonnées, et, en tenant compte en outre d'une fréquence déterminée des manœuvres de freinage des freinages actuellement effectués par le véhicule (32) qui s'écartent des manœuvres de freinage de comparaison, pour estimer si l'apparition d'au moins une dégradation fonctionnelle au niveau d'au moins ledit un composant de système de freinage (10, 12, 14, 16) du système de freinage est probable au moins pendant l'intervalle de temps de prévision prédéfini.

3. Dispositif de prévision (30) selon la revendication 1 ou 2, le dispositif de prévision (30) pouvant être monté sur le véhicule (32).

4. Dispositif de prévision (30) selon la revendication 1 ou 2, le dispositif de prévision (30) comprenant un dispositif de communication (38) qui est conçu pour recevoir les groupes de valeurs (34) transmis par un dispositif de transmission de données (40) du véhicule (32).

5. Procédé de prévision pour au moins un composant de système de freinage (10, 12, 14, 16) d'un système de freinage d'un véhicule (32), comprenant les étapes suivantes :
- déterminer des groupes de valeurs (34), lesquels comportent respectivement des valeurs déterminées lors de plusieurs freinages du véhicule (32) induits par le conducteur et/ou autonomes et comprennent respectivement au moins une grandeur de demande de freinage (x, vₓ et l₀) déterminée à un instant donné, au moins une grandeur de réaction de système de freinage (p₁₂, I et p₁₆) déterminée au même instant et au moins une grandeur de réaction de véhicule (F, α, r et a) déterminée au même instant, ladite au moins une grandeur de demande de freinage (x, vₓ et l₀) représentant respectivement un actionnement d'une pédale de frein par un conducteur du véhicule et/ou une consigne de freinage d'un automate de freinage ou de pilotage du véhicule, ladite au moins une grandeur de réaction de système de freinage (p₁₂, I et p₁₆) représentant respectivement une réaction d'au moins ledit un composant de système de freinage (10, 12, 14, 16) du système de freinage à ladite au moins une grandeur de demande de freinage (x, vₓ et l₀) ou un état au niveau de et/ou dans au moins ledit un composant de système de freinage (10, 12, 14, 16), et ladite au moins une grandeur de réaction de véhicule (F, α, r et a) représentant une grandeur physique du véhicule (32) freiné au moyen du système de freinage (S1) ;
- inscrire les groupes de valeurs (34) déterminés dans des systèmes de coordonnées, chacun des systèmes de coordonnées présentant au moins deux axes qui affichent respectivement la grandeur de demande de freinage ou au moins l'une des grandeurs de consigne de freinage (x, vₓ et lₒ), la grandeur de réaction de système de freinage ou au moins l'une des grandeurs de réaction du système de freinage (p₁₂, I et p₁₆) et/ou la grandeur de réaction de véhicule ou au moins l'une des grandeurs de réaction de véhicule (F, α, r et a) (S3) ; et
- estimer, à l'aide des systèmes de coordonnées, si l'apparition d'au moins une dégradation fonctionnelle au niveau d'au moins ledit un composant de système de freinage (10, 12, 14, 16) du système de freinage est probable au moins pendant un intervalle de temps de prévision prédéfini (S4),
**caractérisé en ce que**
en plus de ladite au moins une grandeur de demande de freinage (x, vₓ et I₀) déterminée à l'instant respectif du groupe de valeurs (34) associé, de ladite au moins une grandeur de réaction de système de freinage (p₁₂, I et p₁₆) déterminée au même instant et de ladite au moins une grandeur de réaction de véhicule (F, α, r et a) du groupe de valeurs (34) respectif déterminée au même instant, au moins un paramètre environnemental (µ) relatif à un environnement actuel du véhicule (32) est déterminé (S1e) au même instant et est joint au groupe de valeurs (34) respectif,
les groupes de valeurs (34) sont inscrits dans au moins un autre système de coordonnées, dans lequel le paramètre environnemental (µ) ou au moins l'un des paramètres environnementaux est affiché au moyen d'un autre axe du système de coordonnées respectif ou au moyen de secteurs dans un plan défini par deux axes de l'autre système de coordonnées respectif, et
en tenant compte en outre dudit au moins un autre système de coordonnées, il est estimé si l'apparition d'au moins une dégradation fonctionnelle au niveau d'au moins ledit un composant de système de freinage (10, 12, 14, 16) du système de freinage est probable au moins pendant l'intervalle de temps de prévision prédéfini.

6. Procédé de prévision selon la revendication 5, dans lequel sont déterminées (S1a), en tant que ladite au moins une grandeur de demande de freinage (x, vₓ et lₒ), une course de tige (x) d'une tige d'entrée reliée à la pédale de frein, une vitesse de déplacement (vₓ) de la tige d'entrée, une intensité de courant moteur de consigne (I₀) d'un moteur d'un dispositif motorisé d'augmentation de pression de freinage (10) du système de freinage demandée par l'automate de freinage ou de pilotage, une tension de fonctionnement de consigne du moteur du dispositif motorisé d'augmentation de pression de freinage (10) demandée par l'automate de freinage ou de pilotage, un couple moteur de consigne du moteur du dispositif motorisé d'augmentation de pression de freinage (10) demandé par l'automate de freinage ou de pilotage, une consommation de puissance de consigne du moteur du dispositif motorisé d'augmentation de pression de freinage (10) demandée par l'automate de freinage ou de pilotage, une course de déplacement de consigne d'au moins un piston mobile du dispositif motorisé d'augmentation de pression de freinage (10) demandée par l'automate de freinage ou de pilotage et/ou un débit de pompage de consigne d'au moins une pompe (14) utilisée dans le système de freinage.

7. Procédé de prévision selon la revendication 5 ou 6, dans lequel sont déterminées (S1b, S1c), en tant que ladite au moins une grandeur de réaction de système de freinage (p₁₂, I et p₁₆), une pression de maître-cylindre (p₁₂) dans un maître-cylindre (12) du système de freinage, au moins une pression de freinage (p₁₆) dans au moins un cylindre de roue (16) du système de freinage, une intensité de courant moteur (I) du moteur du dispositif motorisé d'augmentation de pression de freinage (10) du système de freinage, une tension de fonctionnement du moteur du dispositif motorisé d'augmentation de pression de freinage (10), un couple moteur du moteur du dispositif motorisé d'augmentation de pression de freinage (10), une consommation de puissance du moteur du dispositif motorisé d'augmentation de pression de freinage (10), une course de déplacement d'au moins un piston mobile du dispositif motorisé d'augmentation de pression de freinage (10), une information d'état de régulateur concernant une régulation de pression de freinage éventuellement exécutée ou une régulation de dynamique de conduite éventuellement exécutée, au moins une température au niveau de et/ou dans au moins le dispositif motorisé d'augmentation de pression de freinage (10), un débit de pompage d'au moins une pompe (14) utilisée dans le système de freinage, un rendement d'engrenage d'une transmission du système de freinage reliée au dispositif motorisé d'augmentation de pression de freinage (10) et/ou au moins un état de commutation d'au moins une vanne du système de freinage.

8. Procédé de prévision selon l'une des revendications 5 à 7, dans lequel sont déterminées (S1d), en tant que ladite au moins une grandeur de réaction de véhicule (F, α, r et a), une force de freinage (F) exercée sur le véhicule (32) au moyen du système de freinage, un couple de freinage exercé sur le véhicule (32) au moyen du système de freinage, un angle de braquage (α) du véhicule (32), une vitesse de lacet (r) du véhicule (32), une décélération de véhicule (a) exercée sur le véhicule (32) au moyen du système de freinage, une vitesse longitudinale du véhicule (32), une vitesse transversale du véhicule (32), une accélération transversale du véhicule (32) et/ou une tension de réseau de bord d'un réseau de bord du véhicule (32).

9. Procédé de prévision selon l'une des revendications précédentes 5 à 8, dans lequel est déterminé (S1e), en tant que ledit au moins un paramètre environnemental (µ), un coefficient de frottement de la chaussée (µ), un angle d'inclinaison de la chaussée, un état d'essuie-glace et/ou une température extérieure.

10. Procédé de prévision selon l'une des revendications 5 à 9, dans lequel les systèmes de coordonnées, avec les groupes de valeurs (34) inscrits, sont mémorisés dans un dispositif de mémoire, dans lequel des groupes de valeurs (34) déterminés lors d'autres freinages du véhicule (32) induits par le conducteur et/ou autonomes sont comparés aux systèmes de coordonnées mémorisés dans le dispositif de mémoire afin de déterminer sur la base de la comparaison si une manœuvre de freinage du freinage actuellement effectué par le véhicule (32) s'écarte de manœuvres de freinage de comparaison des freinages effectués lors de la détermination des groupes de valeurs (34) des systèmes de coordonnées, et dans lequel, en tenant compte en outre d'une fréquence déterminée des manœuvres de freinage des freinages actuellement effectués par le véhicule (32) qui s'écartent des manœuvres de freinage de comparaison, il est estimé si l'apparition d'au moins une dégradation fonctionnelle au niveau d'au moins ledit un composant de système de freinage (10, 12, 14, 16) du système de freinage est probable au moins pendant l'intervalle de temps de prévision prédéfini (S10 à S16).
